# EUROPEAN PATENT APPLICATION

(11) **EP 4 814 571 A1**
(43) Date of publication of application: **30.09.2026**
(21) Application number: 25781292.5
(22) Date of filing: 13.01.2025
(51) Int. Cl.: G02C 13/00, G02C 7/06

(54) **MICROLENS ARRANGEMENT METHOD**

(30) Priority: 02.04.2024 CN 202410395255
(71) Applicant: Mingyue Optical Lens Co., Ltd., Zhenjiang, Jiangsu 212300 (CN)
(72) Inventor: LUAN, Yi, Zhenjiang, Jiangsu 212300 (CN); ZHAO, Lin, Zhenjiang, Jiangsu 212300 (CN); XIE, Gongwan, Zhenjiang, Jiangsu 212300 (CN); XIE, Gongxing, Zhenjiang, Jiangsu 212300 (CN); ZHU, Haifeng, Zhenjiang, Jiangsu 212300 (CN)
(74) Representative: Icosa
(86) International application number: PCT/CN2025/072117
(87) International publication number: WO 2025/208995

(57) **Abstract**

Embodiments of the present disclosure provide a microlens arrangement method. The arrangement method comprises: acquiring the position of a central prescription area; acquiring the position of a reference circle; acquiring the position of a reference loop line of an innermost layer; acquiring inter-line distances, and on the basis of the position of the reference loop line of the innermost layer, sequentially accumulating the inter-line distances in the direction moving away from the reference circle to calculate the positions of reference loop lines of the remaining layers; acquiring the number of reference points of reference loop lines of layers, and acquiring the positions of starting reference points; acquiring center distances, and on the basis of the center distances and the positions of the starting reference points, calculating the positions of the remaining reference points on the reference loop lines in the directions of extension of the reference loop lines; and determining corresponding projection points of the reference points on a base body arc surface of a lens base body in the thickness direction of the lens base body, and determining the positions of the microlenses on the basis of the positions of the projection points. According to the microlens arrangement method in the embodiments of the present disclosure, the positions of the microlenses on the lens base body are determined, facilitating two-dimensional coordinate parameterization of the positions of the reference points.

## Description

### RELATED APPLICATIONS

This disclosure claims the priority of Chinese Patent Application No. 202410395255.6, filed on April 02, 2024, entitled "ARRANGEMENT METHOD OF MICROLENSES", the disclosure of which is hereby incorporated by reference in its entirety.

### TECHNICAL FIELD

The present disclosure relates to the technical field of glasses, and more particularly, to an arrangement method of microlenses.

### BACKGROUND

In recent years, more and more attention has been paid to the prevention and control of myopia.

By arranging a plurality of microlenses in a lens to form myopic or hyperopic defocus, it is helpful to inhibit eye axis elongation during wearing of the glasses, thereby inhibiting the lens power of myopia or hyperopia from increasing.

In a preparation process of a lens having microlenses, it is necessary to first determine positions of the microlenses on a lens substrate, and then manufacture the microlenses at corresponding positions. Therefore, determining positions of the microlenses on the lens substrate is directly related to the normal execution of the subsequent manufacturing process.

### SUMMARY

In view of this, embodiments of the present disclosure intend to provide an arrangement method of microlenses, for determining arrangement positions of the microlenses on a lens substrate.

To achieve the above purpose, technical solutions of embodiments of the present disclosure are implemented as follows.

The present disclosure provides an arrangement method of microlenses, which comprises the following operations.

A position of a central prescription area of a lens substrate on a base plane of the lens substrate is obtained.

A position of a datum circle on the base plane is obtained so that the central prescription area is located within a range of the datum circle.

A position of an innermost datum loop line of datum loop lines is obtained so that the datum circle is located inside the innermost datum loop line.

Inter-line distances each defined between two adjacent datum loop lines of the datum loop lines are obtained, and the inter-line distances sequentially accumulated in a direction away from the datum circle based on the position of the innermost datum loop line, to calculate positions of the remaining datum loop lines of the datum loop lines.

The number of datum points on each of the datum loop lines and a position of a starting datum point of the datum points are obtained.

A center distance between reference projections of any two adjacent microlenses on each of the datum loop lines is obtained, and positions of the remaining datum points on each of the datum loop lines are calculated based on the center distance and the position of the starting datum point, along an extension direction of each of the datum loop lines.

Corresponding projection points of the datum points on a substrate arc surface of the lens substrate along a thickness direction of the lens substrate are determined, and positions of the microlenses are determined based on positions of the projection points.

In some embodiments, the operation that the central prescription area is located within the range of the datum circle specifically includes coinciding the datum circle with the central prescription area.

In some embodiments, the innermost datum loop line and the datum circle are configured such that at least some of reference projections on the innermost datum loop line are tangent to the datum circle.

In some embodiments, the operation that the position of the innermost datum loop line is obtained specifically comprises the following operations.

A first spacing between the innermost datum loop line and the datum circle is obtained, and a radius of the innermost datum loop line is calculated based on a sum of the first spacing and a radius of the datum circle.

The position of the innermost datum loop line is determined based on a position of a center of the datum circle.

In some embodiments, each of the inter-line distances is provided as a fixed value not less than a chord length of a base plane of each of the microlenses.

The operation that the inter-line distances are sequentially accumulated in the direction away from the datum circle to calculate the positions of the datum loop lines, specifically includes the following operations.

The inter-line distances are sequentially accumulated from inside to outside along a radial direction of the datum circle based on the radius of the innermost datum loop line, to calculate radii of the remaining datum loop lines.

Positions of the remaining datum loop lines are determined based on the position of the innermost datum loop line and the radii of the remaining datum loop lines.

In some embodiments, the arrangement method, before calculating the radii of the remaining datum loop lines, further comprises the following operations.

A radius of the base plane is obtained.

A difference between the radius of the base plane and the radius of the datum circle is calculated to obtain a first radial dimension.

A quotient of the first radial dimension divided by the inter-line distance is calculated, and rounds down, to obtain a value of the total number of the datum loop lines.

In some embodiments, the operation of obtaining the number of the datum points on each of the datum loop lines specifically comprises the following operation.

A quotient of a perimeter of each of the datum loop lines divided by the center distance is calculated and rounds down, to obtain the number of the datum points on each of the datum loop lines.

In some embodiments, the operation of obtaining the position of the starting datum point on each of the datum loop lines specifically comprises the following operation.

An intersection of each of the datum loop lines with a straight line passing through the center of the datum circle is determined as the starting datum point.

In some embodiments, the operation of obtaining the position of the starting datum point on each of the datum loop lines specifically comprises the following operations.

A position of a reference curve is obtained, in which the reference curve passes through the innermost datum loop line and a boundary of the base plane of the lens substrate.

An intersection of each of the datum loop lines with the reference curve is determined as the starting datum point.

In some embodiments, each of the datum loop lines comprises a first main arc and second main arcs; and the operation of obtaining the position of the innermost datum loop line specifically comprises the following operations.

Initial parameters are obtained, which comprises obtaining a radius of the first main arc of the innermost datum loop line, a radius of each of the second main arcs of the innermost datum loop line, a reference spacing, and a preset chamfer angle.

A reference circle is determined, which comprises the following operation. A radius and a position of a center of the reference circle are determined based on the reference spacing, a radius of the datum circle, and a position of a center of the datum circle.

The first main arc of the innermost datum loop line is determined, which comprises the following operation. The first main arc of the innermost datum loop line is arranged to be axisymmetric with respect to a first straight line in a vertical direction passing through the center of the datum circle, and to be tangent to the reference circle.

The second main arcs of the innermost datum loop line are determined, which comprises the following operations. The second main arcs are arranged to be located below the first main arc, and two second main arcs are arranged to be axisymmetric with respect to the first straight line and tangent to the reference circle. A position of a first tangent line formed by the first main arc and the reference circle is obtained. A position of a second tangent line formed by a respective second main arc of the second main arcs and the reference circle is obtained. It is determined that an angle between the first tangent line and the second tangent line is equal to the preset chamfer angle.

In some embodiments, it is determined that the radius of the first main arc is equal to the radius of each of the second main arcs; and/or, it is determined that the reference circle is located on a concave side of the first main arc, and the reference circle is located on a concave side of each of the second main arcs.

In some embodiments, each of the datum loop lines further comprises first connection arcs and a second connection arc. The operation of obtaining the initial parameters further comprises: obtaining a radius of each of the first connection arcs and a radius of the second connection arc.

The arrangement method, after the operation of determining the second main arcs of the innermost datum loop line, further comprises the following operations.

The first connection arcs of the innermost datum loop line are determined, which comprises the following operations. Each of the first connection arcs of the innermost datum loop line is arranged to be connected with an end point of the first main arc of the innermost datum loop line and to be connected with a first end point of a respective second main arc of the second main arcs of the innermost datum loop line, and to be tangent to both the first main arc of the innermost datum loop line and the respective second main arc of the innermost datum loop line.

The second connection arc of the innermost datum loop line is determined: which comprises the following operation. The second connection arc of the innermost datum loop line is arranged to be connected with a second end point of each of two second main arcs of the innermost datum loop line, and to be tangent to the two second main arcs.

In some embodiments, it is determined that the radius of each of the first connection arcs is equal to the radius of the second connection arc; and/or, it is determined that the reference circle is located on a concave side of each of the first connection arcs, and the reference circle is located on a concave side of each of the second main arcs.

In some embodiments, the operation of sequentially accumulating the inter-line distances in the direction away from the datum circle to obtain the datum loop lines specifically comprises the following operations.

Centers are determined, which comprises determining that first main arcs of the datum loop lines share a same center, and second main arcs on a same side of the datum loop lines share a same center.

The first main arc of each of the datum loop lines is determined, which comprises the following the following operations.

The inter-line distances are sequentially accumulated from inside to outside along a radial direction of the first main arc, based on the radius of the first main arc of the innermost datum loop line, to calculate a radius of the first main arc of each of the remaining datum loop lines.

A position of the first main arc of each of the datum loop lines calculated based on the center of the first main arc of the innermost datum loop line and the radius of the first main arc of each of the remaining datum loop lines;

The second main arcs of each of the datum loop lines are determined, which comprises the following operations.

The inter-line distances are sequentially accumulated from inside to outside along a radial direction of each of the second main arcs based on the radius of each of the second main arcs of the innermost datum loop line, to calculate a radius of each of the second main arcs of each of the remaining datum loop lines.

A position of each of the second main arcs of each of the datum loop lines is calculated based on the center of each of the second main arcs of the innermost datum loop line and the radius of each of the second main arcs of each of the remaining datum loop lines.

In some embodiments, the arrangement method, after the operation of determining the second main arcs of each of the datum loop lines, further comprises the following operations.

It is determined that radii of the first connection arcs of the datum loop lines are the same, and it is determined that radii of the second connection arcs of the datum loop lines are the same.

The first connection arcs of each of the datum loop lines are determined, which comprises the following operation. Each of the first connection arcs of each of the datum loop lines is arranged to be connected with an end point of the first main arc of a respective datum loop line of the datum loop lines and a first end point of a respective second main arc of the second main arcs of the respective datum loop line, and to be tangent to both the first main arc and the respective second main arc of the respective datum loop line.

The second connection arc of each of the datum loop lines is determined, which comprises the following operation. The second connection arc of each of the datum loop lines is arranged to be connected with a second end point of each of two second main arcs of a respective datum loop line of the datum loop lines, and to be tangent to the two second main arcs of the respective datum loop line.

In some embodiments, the operation of obtaining the number of the datum points on each of the datum loop lines specifically comprises the following operations.

A quotient of an arc length of the first main arc divided by the center distance is calculated and rounds down, to obtain the number of datum points on the first main arc.

A quotient of an arc length of any one of the second main arcs divided by the center distance is calculated and rounds down, to obtain the number of datum points on each of the second main arcs.

A quotient of an arc length of any one of the first connection arcs divided by the center distance is calculated and rounds down, to obtain the number of datum points on each of the first connection arcs.

A quotient of an arc length of the second connection arc divided by the center distance is calculated and rounds down, to obtain the number of datum points on the second connection arc.

In some embodiments, the operation of obtaining the position of the starting datum point specifically comprises the following operation.

Along a first surrounding direction, a head end of the first main arc is determined to be a starting datum point on the first main arc, head ends of the second main arcs are determined to be starting datum points on the second main arcs, head ends of the first connection arcs are determined to be starting datum points on the first connection arcs, and a head end of the second connection arc is determined to be a starting datum point on the second connection arc.

In some embodiments, the operation of obtaining the inter-line distances each defined between two adjacent datum loop lines specifically comprises the following operations.

A chord length of a base plane of any one of the microlenses and a first proportional coefficient are obtained, the first proportional coefficient being greater than 1.

A first inter-line distance of the inter-line distances along a direction away from the datum circle is calculated based on a product of the chord length of the base plane and the first proportional coefficient; and
A subsequent inter-line distance of the inter-line distances is calculated based on a product of a previous inter-line distance of the inter-line distances and the first proportional coefficient along the direction away from the datum circle.

In some embodiments, the operation of obtaining the inter-line distances each defined between two adjacent datum loop lines specifically comprises the following operations.

A second proportional coefficient and an inter-lens distance between two adjacent reference projections on a same datum loop line of the datum loop lines are obtained, the second proportional coefficient being greater than 1.

A datum radius of each of the microlenses corresponding to the innermost datum loop line is obtained.

A product of a radius of each of the reference projections on a previous datum loop line of the datum loop lines and the second proportional coefficient is calculated along a direction away from the datum circle, to obtain a radius of each of the reference projections of a subsequent datum loop line of the datum loop lines.

A sum of the radius of any one of the reference projections on the previous datum loop line, the radius of any one of the reference projections on the subsequent datum loop line, and the inter-lens distance is obtained to obtain the inter-line distances.

In some embodiments, the reference projections corresponding to each of the datum loop lines comprise first sub-projections and second sub-projections, and a radius of each of the second sub-projections is greater than a radius of each of the first sub-projections.

The operation of obtaining the inter-line distances each defined between two adjacent datum loop lines specifically comprises the following operations.

A second proportional coefficient and an inter-lens distance between two adjacent reference projections on a same datum loop line of the datum loop lines are obtained, the second proportional coefficient being greater than 1.

A datum radius of each of the second sub-projections corresponding to the innermost datum loop line is obtained.

A product of the radius of any one of the second sub-projections corresponding to a previous datum loop line of the datum loop lines and the second proportional coefficient is calculated along a direction away from the datum circle, to obtain a radius of each of the second sub-projections corresponding to a subsequent datum loop line of the datum loop lines.

A sum of the radius of any one of the second sub-projections corresponding to the previous datum loop line, the radius of any one of the second sub-projections corresponding to the subsequent datum loop line, and the inter-lens distance is calculated, to obtain the inter-line distances.

In the arrangement method of microlens in the embodiments of the present disclosure, by determining positions of datum loop lines and datum points on a base plane, and then indirectly determining positions of projection points on an arc surface of a lens substrate, positions of the microlenses on the lens substrate are determined. By arranging the datum loop lines and the datum points on the base plane, it is conducive to realizing two-dimensional coordinate parameterization of the positions of the datum points, the calculation process can be simplified and calculation efficiency can be improved; and it is realized that the microlenses surround the central prescription area to satisfy the need for the human eye to be subjected to the defocusing effect of the microlenses during rotation.

### BRIEF DESCRIPTION OF THE DRAWINGS

Fig. 1 is a schematic diagram of steps of an arrangement method based on an embodiment of the present disclosure.
Fig. 2 is a schematic diagram of the arrangement of reference projections on a base plane in a first embodiment of the present disclosure.
Fig. 3 is a partially enlarged schematic diagram of a position A in Fig. 2.
Fig. 4 is a schematic diagram of the arrangement of reference projections on a base plane in a second embodiment of the present disclosure.
Fig. 5 is a partially enlarged schematic diagram of a position B in Fig. 4.
Fig. 6 is a schematic diagram showing an innermost datum loop line, a first tangent line, a second tangent line, and a reference circle in the embodiment of Fig. 4.
Fig. 7 is a schematic diagram of the arrangement of reference projections on a base plane in a third embodiment of the present disclosure.
Fig. 8 is a schematic diagram of the arrangement of reference projections on a base plane in a fourth embodiment of the present disclosure.
Fig. 9 is a schematic diagram of the arrangement of reference projections on a base plane in a fifth embodiment of the present disclosure.
Fig. 10 is a partially enlarged schematic diagram of a position C in Fig. 4.
Fig. 11 is a cross-sectional schematic diagram of a lens substrate and microlenses based on an embodiment of the present disclosure.

### DETAILED DESCRIPTION

It should be noted that, in the case of no conflict, embodiments in the present disclosure and technical features in the embodiments can be combined with each other. The detailed description in the specific implementation ways should be understood as an explanation of the present disclosure and should not be regarded as an improper limitation of the present disclosure.

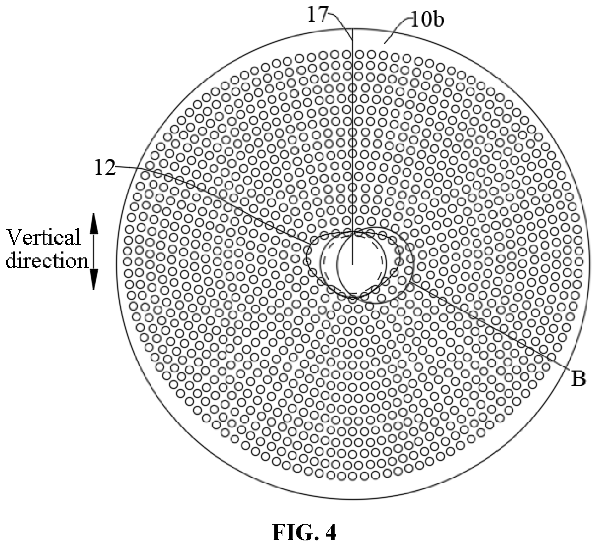

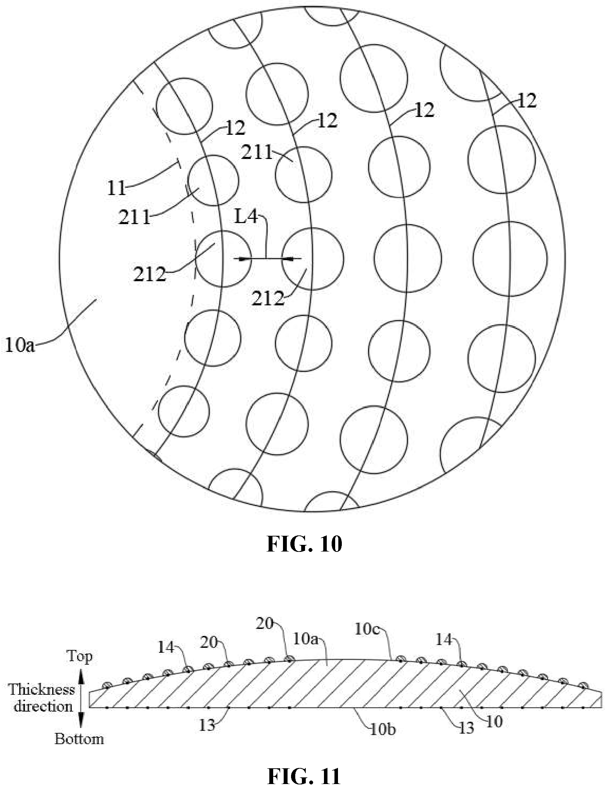

In the description of the embodiments of the present disclosure, orientation or positional relationship regarding a "vertical direction" is based on the orientation or positional relationship shown in Fig. 4, and orientation or positional relationship regarding a "thickness direction" is based on the orientation or positional relationship shown in Fig. 11. It should be understood that these orientation terms are only for the convenience of describing the present disclosure and simplifying the description, and do not indicate or imply that the device or element referred to must have a specific orientation, be constructed and operated in a specific orientation, and therefore cannot be understood as a limitation on the embodiments of the present disclosure.

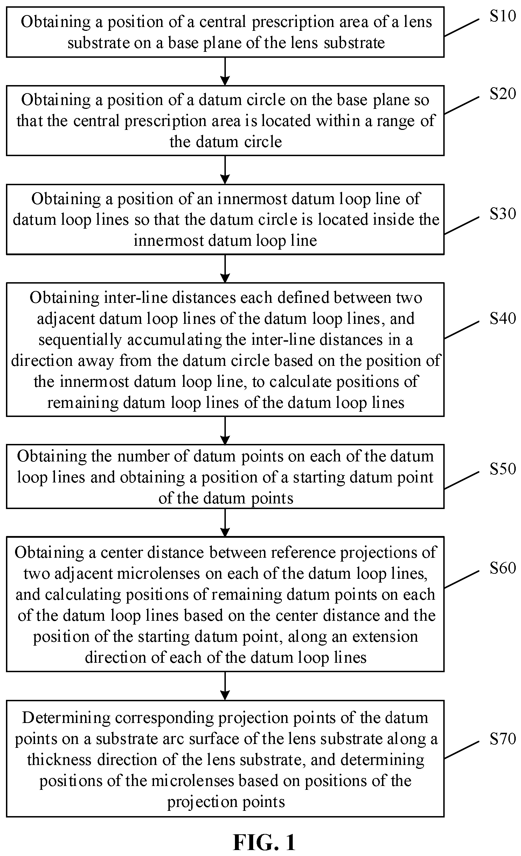

Embodiments of the present disclosure provide an arrangement method for determining positions of microlenses 20 on a lens substrate 10. Referring to Fig. 1, the arrangement method includes the following operations.

S10: a position of a central prescription area 10a of a lens substrate 10 on a base plane 10b of the lens substrate is obtained.

The lens substrate 10 refers to a light-transmitting structural member on which microlenses 20 are arranged.

The specific material of the lens substrate 10 is not limited, for example, glass, resin, etc.

The base plane 10b of the lens substrate 10 refers to a plane perpendicular to a thickness direction of the lens substrate 10.

The base plane 10b of the lens substrate 10 can be an actual existed surface of surfaces of the lens substrate 10. For example, during users' wearing of the lens, a surface on a side close to the human eye along the thickness direction of the lens substrate 10 is the surface of the lens substrate 10; the surface of the lens substrate can also be a virtual surface assumed to exist inside the lens substrate 10 for convenience of reference.

The central prescription area 10a refers to an area having a diopter that is the diopter of the prescription used for correcting vision by the lens.

S20: a position of a datum circle 11 on the base plane 10b is obtained, so that the central prescription area 10a is located within a range of the datum circle 11.

That is to say, in projections perpendicular to the thickness direction of the lens substrate 10, the projection of the central prescription area 10a is located within the range of the projection of the datum circle 11.

The datum circle 11 is used as a reference to determine a boundary between a projection region of the central prescription area 10a on the base plane 10b and a defocusing region formed by the microlenses 20.

S30: an innermost datum loop line 12 of datum loop lines is obtained so that the datum circle 11 is located inside the innermost datum loop line.

That is to say, in projections perpendicular to the thickness direction of the lens substrate 10, the projection of the datum circle 11 is located within the range of the projection of the innermost datum loop line 12, so that the microlenses 20 can surround the central prescription area 10a.

The datum loop line 12 is configured as a reference line for arranging datum points 13 in subsequent steps, and is located on the base plane 10b.

It can be understood that in order for the human eye to be influenced by the refractive power of the microlens 20 during rotation, the datum loop line 12 is a closed annular line to achieve the purpose of the microlenses 20 being able to surround the central prescription area 10a.

It can be understood that there are multiple layers of datum loop lines 12, and the datum loop lines 12 are nested in sequence along the direction away from the datum circle 11, that is, in two adjacent datum loop lines 12, an inner datum loop line 12 is located inside an outer datum loop line 12. The innermost datum loop line 12 is a datum loop line 12 among all datum loop lines 12 closest to the datum circle 11 along a direction close to the datum circle 11.

S40: inter-line distances each defined between two adjacent datum loop lines of the datum loop lines 12 are obtained, and the inter-line distances are sequentially accumulated in a direction away from the datum circle 11 based on the position of the innermost datum loop line 12, to calculate positions of the remaining datum loop lines of the datum loop lines 12.

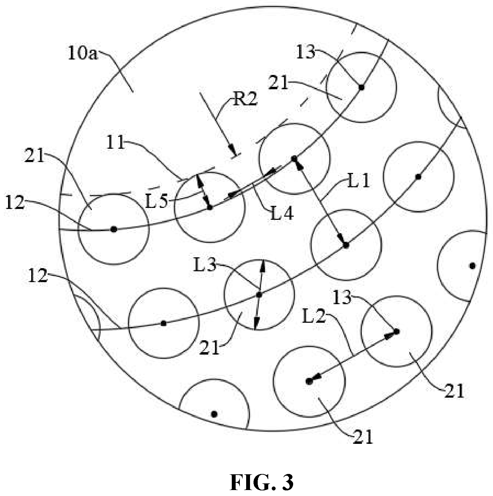

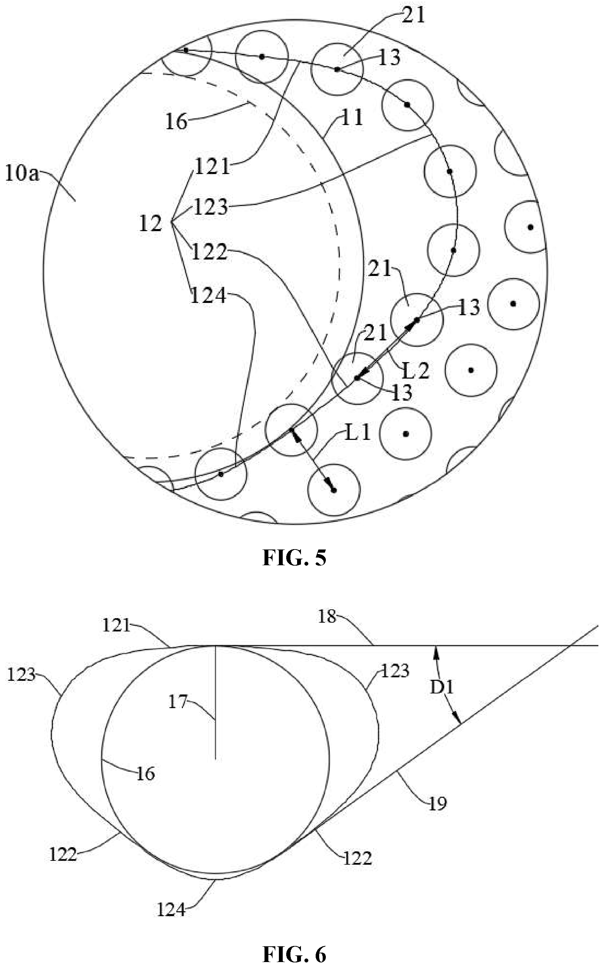

The inter-line distance is a distance between two adjacent datum loop lines 12 along a direction away from the datum circle 11. Referring to Fig. 3 and Fig. 5, the inter-line distance is denoted by L1.

S50: the number of datum points 13 on each of the datum loop lines 12 and a position of a starting datum point 13 of the datum points are obtained.

The datum points 13 are points on the datum loop line 12.

The starting datum point 13 is a first datum point 13 along a direction in which the datum points 13 are arranged on the datum loop line 12.

It can be understood that on the same layer of datum loop line 12, it is necessary to first determine a position of a first datum point 13, and then use the position of this datum point 13 as a reference to determine positions of other datum points 13.

S60: a center distance between reference projections 21 of any two adjacent microlenses 20 on each of the datum loop lines 12 is obtained, and positions of the remaining datum points 13 on each of the datum loop lines 12 are calculated based on the center distance and the position of the starting datum point 13 along an extension direction of each of the datum loop lines 12.

The reference projection 21 refers to a projection of the microlens 20 on the base plane 10b along a thickness direction of the lens substrate 10.

The center distance refers to a distance between projections, along the thickness direction of the lens substrate 10, of geometric centers of two adjacent reference projections 21 on the same datum loop line 12. The center distance is a pre-set distance. Referring to Fig. 3 and Fig. 5, the center distance is denoted by L2.

It can be understood that in the case where the projection of the microlens 20 along the thickness direction of the lens substrate 10 is a circle, the geometric center of the microlens 20 is the center of circle of the microlens.

Thus, a position of a next datum point 13 on the datum loop line 12 can be obtained by spacing one center distance from a position of one datum point 13 along the extension direction of the datum loop line 12.

S70: corresponding projection points 14 of the datum points 13 on a substrate arc surface 10c of the lens substrate 10 along a thickness direction of the lens substrate 10 are determined, and positions of the microlenses 20 are determined based on positions of the projection points 14.

Referring to Fig. 11, the substrate arc surface 10c is an arc surface of the lens substrate 10 on which the microlenses 20 are arranged.

The projection points 14 are points generated by projections of the datum points 13 on the substrate arc surface 10c along the thickness direction of the lens substrate 10.

That is to say, the microlenses 20 are manufactured on the substrate arc surface 10c based on the positions of the projection points 14.

It can be understood that the substrate arc surface 10c and the base plane 10b are respectively located on opposite sides of the lens substrate 10 along its thickness direction.

In the arrangement method of microlenses 20 in embodiments of the present disclosure, positions of datum loop lines 12 and datum points 13 on the base plane 10b are determined, and then positions of projection points 14 on the substrate arc surface 10c are indirectly determined, thereby determining positions of the microlenses 20 on the lens substrate 10. Arranging the datum loop lines 12 and the datum points 13 on the base plane 10b is conducive to realizing two-dimensional coordinate parameterization of the positions of the datum points 13, which can simplify the calculation process and improve calculation efficiency; further, it realizes that the microlenses 20 surround the central prescription area 10a to satisfy the need for the human eye to be subjected to the defocusing effect of the microlenses 20 during rotation.

The specific way to determine the positions of the microlenses 20 by the projection points 14 is not limited.

Exemplarily, the microlens 20 is a circle, and the center of the microlens 20 is at the position of the projection point 14.

It should be noted that in order to make finished lens meet diopter requirements of an application scenario, the base plane 10b of the lens substrate 10 can be further processed into a concave surface or a convex surface in subsequent steps, and specific methods and the relevant processes and equipment required have been disclosed in the related art and will not be repeated here.

In some embodiments, the operation that the central prescription area 10a is located within the range of the datum circle 11 specifically includes the following operation.

The datum circle 11 coincides with the central prescription area 10a.

That is to say, an area enclosed inside the datum circle 11 is equal to the central prescription area 10a.

Thus, the microlenses 20 are advantageously arranged close to the central prescription area 10a, so that on the one hand a space utilization of the lens substrate 10 can be improved; and on the other hand the defocusing region generated by the microlenses 20 can be close to the central prescription area 10a, improving the defocusing effect.

A relative positional relationship between the innermost datum loop line 12 and the datum circle 11 is not limited.

Exemplarily, referring to Fig. 3 and Fig. 5, the innermost datum loop line 12 and the datum circle 11 are configured such that: at least some of the reference projections 21 on the innermost datum loop line 12 are tangent to the datum circle 11.

Thus, the microlenses 20 are advantageously close to the central prescription area 10a, improving utilization rate of an upper surface of the lens substrate 10, and improving the defocusing effect of the defocusing region formed by the microlenses 20.

It can be understood that a boundary of at least a part of the reference projections 21 is arc-shaped to achieve the purpose of being tangent to the datum circle 11.

It can be understood that in some embodiments, the inter-line distance is equal to the center distance, that is, L1=L2.

### First Implementation Way

This implementation way can form one or more annular defocusing regions on a user's retina to inhibit a trend of increasing user's lens power.

In some embodiments, referring to Figure 3, the operation that the position of the innermost datum loop line 12 is obtained specifically includes the following operations.

A first spacing between the innermost datum loop line 12 and the datum circle 11 is obtained, and a radius of the innermost datum loop line 12 is calculated based on a sum of the first spacing and a radius of the datum circle 11.

The position of the innermost datum loop line 12 is determined based on a position of a center of the datum circle 11.

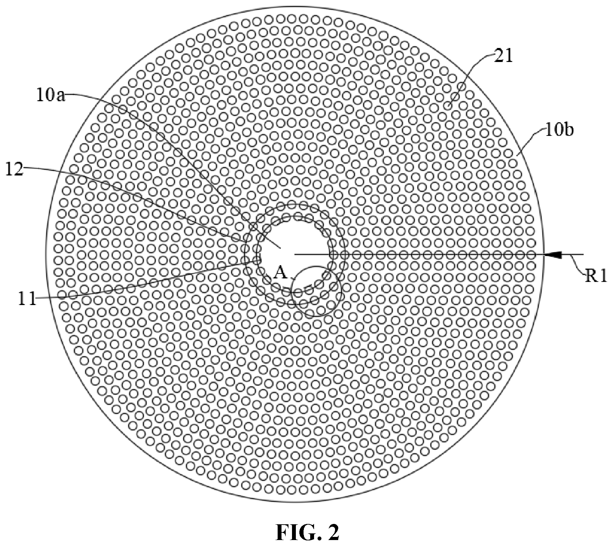

That is to say, referring to Figs. 2 and 3, the innermost datum loop line 12 is a circle, the radius of the datum circle 11 is denoted by R2, the first spacing is denoted by L5, and the sum of R2 and L5 is equal to the radius of the innermost datum loop line 12.

Since the innermost datum loop line 12 is circular, the datum points 13 arranged on the innermost datum loop line 12 are also advantageously arranged in a circular array, so that the microlenses 20 formed correspondingly on the substrate arc surface 10c are also arranged in a circular array, thereby forming an annular defocusing region on the user's retina to inhibit a trend of increasing lens power of the user.

The specific method for setting the innermost datum loop line 12 by using the center of the datum circle 11 as a reference is not limited. For example, the center of the datum circle 11 is the center of the datum loop line 12. As such, the shape of the datum loop line 12 can be determined based on the position of the center of the datum loop line 12 and the radius of the datum loop line 12. For another example, the position of the center of the datum loop line 12 is offset from the center of the datum circle 11 by a preset offset distance, so that the formed annular defocusing region adapts to needs of different groups of people.

The specific value of the first spacing is not limited. For example, in an embodiment where the microlenses 20 to be prepared are spherical, the reference projections 21 are circular, and the first spacing is a radius of each of reference projections 21 on the innermost datum loop line, the microlenses 20 thus can be as close to the central prescription area 10a as possible, thereby increasing the utilization rate of the layout space on the lens substrate 10.

In some embodiments, referring to Fig. 3, the inter-line distance is configured as a fixed value not less than a chord length of a base plane 10b of each of the microlenses 20.

The operation that the inter-line distances are sequentially accumulated in the direction away from the datum circle 11 to calculate the positions of the datum loop lines 12 specifically includes the following operations.

The inter-line distances are sequentially accumulated from inside to outside along a radial direction of the datum circle 11 based on the radius of the innermost datum loop line 12 to calculate radii of the remaining datum loop lines 12;
Positions of the remaining datum loop lines 12 are determined based on the position of the innermost datum loop line 12 and the radii of the remaining datum loop lines 12.

The chord length of the base plane 10b of the microlens 20 is the dimension denoted by L3 in Fig. 3. In the case where the reference projection 21 is circular, the chord length of the base plane 10b is provided as the diameter of the reference projection 21; and in the case where the reference projection 21 is a regular polygon, the chord length of the base plane 10b is provided as the diameter of the circumcircle of the reference projection 21.

The inter-line distance is a fixed value, so that a spacing between every two datum loop lines 12 is equal.

The inter-line distance is greater than the chord length of the base plane 10b, so that the reference projections 21 on two adjacent datum loop lines 12 do not overlap.

By continuously accumulating the inter-line distances, each datum loop line 12 can be circular.

The radius of each datum loop line 12 is equal to the sum of the radius of the previous datum loop line 12 and the inter-line distance between two datum loop lines 12.

Thus, each datum loop line 12 is circular, so that a plurality of annular defocusing regions can be formed on the user's retina, thereby better inhibiting a trend of increasing lens power of the user.

It can be understood that all datum loop lines 12 have a same center.

In some embodiments, referring to Figs. 2 and 3, before calculating the radii of the remaining datum loop lines 12, the arrangement method further includes the following operations.

A radius of the base plane 10b is obtained.

A difference between the radius of the base plane 10b and the radius of the datum circle 11 is calculated to obtain a first radial dimension.

A quotient of the first radial dimension divided by the inter-line distance is calculated and rounds down to obtain a value of the total number of the datum loop lines 12.

The radius of the base plane 10b is a radius in the case where the base plane 10b is circular.

The first radial dimension is equal to a difference obtained by subtracting R2 from R1.

The expression that the quotient of the first radial dimension divided by the inter-line distance rounds down means that after calculating the quotient of the first radial dimension divided by the inter-line distance, the integer part of the value of the quotient is taken. For example, if the quotient of the first radial dimension divided by the inter-line distance is 10.43, which rounds down to 10, then the total number of the datum loop lines 12 is 10.

Thus, the microlenses 20 are all completely located on the lens substrate 10, and each manufactured microlens 20 maintains structural integrity. Therefore, advantageously, the defocusing effect of the defocusing region formed by the microlenses 20 meets the design requirements.

In some embodiments, the operation that the number of the datum points 13 on each of the datum loop lines 12 is obtained specifically includes the following operations.

A quotient of a perimeter of each of the datum loop lines 12 divided by the center distance is calculated and rounds down to obtain the number of the datum points 13 on each of the datum loop lines 12.

The expression that the quotient of the perimeter of each of the datum loop lines 12 divided by the center distance rounds down means that after calculating the quotient of the perimeter of each of the datum loop lines 12 divided by the center distance, the integer part of the value of the quotient is taken. For example, if the quotient of the perimeter of the datum loop line 12 divided by the center distance is 20.56, which rounds down to 20, then the number of datum points 13 arranged on the datum loop line 12 is 20.

Thus, the microlenses 20 will not overlap in arrangement, and in the case where the requirements of the center distance are met, as many datum points 13 as possible are arranged on the datum loop line 12, which is conducive to improving space utilization and improving the defocusing effect of the defocusing region formed by the plurality of microlenses 20.

The specific method for determining the starting datum point 13 on the datum loop line 12 is not limited.

For example, referring to Fig. 2, the operation that the position of the starting datum point 13 on each of the datum loop lines 12 is obtained specifically includes the following operation.

An intersection of each of the datum loop lines 12 with a straight line passing through the center of the datum circle 11 is determined as the starting datum point 13.

That is to say, the starting datum points 13 on the datum loop lines 12 are located on the same straight line.

Thus, the starting datum point 13 of the innermost datum loop line 12 can be used to determine the position of the starting datum point 13 of each of the other datum loop lines 12, which can advantageously simplify the calculation process of determining the position of the starting datum point 13 of each of the other datum loop lines 12. The method is simple and intuitive, which is conducive to improving calculation efficiency.

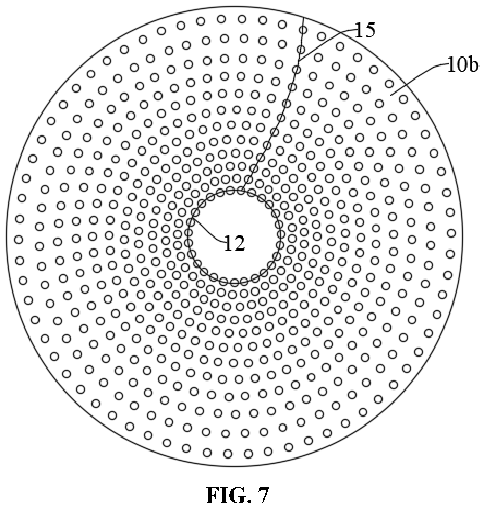

For another example, referring to Fig. 7, the operation that the position of the starting datum point 13 on each of the datum loop lines 12 is obtained specifically includes the following operations.

A position of a reference curve 15 is obtained, herein the reference curve 15 passes through the innermost datum loop line 12 and a boundary of the base plane 10b of the lens substrate 10.

An intersection of each of the datum loop lines 12 with the reference curve 15 is determined as the starting datum point 13.

That is to say, the starting datum points 13 on the datum loop lines 12 are located on the same curve.

Thus, the formed microlenses 20 are advantageously arranged more uniformly, and the defocusing region formed by the microlenses 20 advantageously have a better defocusing effect.

The specific form of the curve is not limited, for example, a conic curve, a spiral curve, etc.

In some embodiments, the radius of the datum circle 11 is denoted by R₀, the radius of the lens substrate 10 is denoted by D, the chord length of the base plane 10b of the microlens 20 is demoted by L3, the center distance is L2 = 3/2 * L3, and the inter-line distance is L1 = 3/2 * L3.

An radius of an i-th datum loop line 12 satisfies the following formula: ${r}_{i} = {R}_{0} + \left(\left(2i-1\right)*L3\right) / 2 .$

In the above formula, rᵢ is a radius of an i-th datum loop line 12, where i=1, 2, 3, 4 ... n, and n is the total number of the datum loop lines 12.

The number m of datum points 13 on the i-th datum loop line 12 satisfies the following formula: $m = floor \left(2*π*{r}_{i}/L2\right) .$

In the above formula, "floor" refers to a rounding down function.

The total number n of the datum loop lines 12 satisfies: $n = floor \left(\left(D-{R}_{0}\right)/L1\right) .$

By establishing a two-dimensional coordinate system on the base plane 10b, arranging the datum circle 11 to coincide with the central prescription area 10a, taking the center of the datum circle 11 as the coordinate origin, and locating the starting datum point 13 on each of the datum loop lines 12 on a horizontal axis passing through the coordinate origin, coordinates of a j-th datum point 13 on the i-th datum loop line 12 can be obtained as follows in the first implementation way: $\left({r}_{i}*cos\left(j*2π/m\right), {r}_{i}*sin\left(j*2π/m\right)\right) .$

Where j=1, 2 ... m, and m is the number of datum points 13 on the i-th datum loop line 12.

### Second Implementation Way

This implementation way can better adapt to the eye-use habit of moving the eyeballs left and right frequently and moving them up and down less, and increase eye comfort on the basis of satisfying the defocusing effect.

In some embodiments, referring to Figs. 4 to 6, the datum loop line 12 comprises a first main arc 121 and second main arcs 122.

The operation of obtaining the position of the innermost datum loop line 12 specifically includes the following operations.

Initial parameters: a radius of the first main arc 121 of the innermost datum loop line 12, a radius of each of the second main arcs 122 of the innermost datum loop line 12, a reference spacing, and a preset chamfer angle, are obtained.

The reference spacing is a preset spacing value between a reference circle 16 and the datum circle 11.

A reference circle 16 is determined, which includes determining a position of a center and a radius of the reference circle 16 based on the reference spacing, the radius of the datum circle 11 and a position of a center of the datum circle 11.

The first main arc 121 of the innermost datum loop line 12 is determined: which includes arranging the first main arc 121 of the innermost datum loop line 12 to be axisymmetric with respect to a first straight line 17 in a vertical direction passing through the center of the datum circle 11, and to be tangent to the reference circle 16.

By providing the reference circle 16, the position of the first main arc 121 can be obtained through the relevant parameters of the datum circle 11.

The vertical direction refers to a straight line direction in which the direction of gravity is located when the user wears the lens substrate 10.

It can be understood that a center of the first main arc 121 is located on the first straight line 17. Given the radius of the first main arc 121, the first main arc 121 can be obtained.

The second main arcs 122 of the innermost datum loop line 12 are determined: which includes the following operations. The second main arcs 122 are arranged to be located below the first main arc 121, and two second main arcs 122 are axisymmetric with respect to the first straight line 17 and tangent to the reference circle 16. A position of a first tangent line 18 formed by the first main arc 121 and the reference circle 16 is obtained. A position of a second tangent line 19 formed by a respective second main arc of the second main arcs 122 and the reference circle 16 is obtained, and an angle between the first tangent line 18 and the second tangent line 19 being equal to the preset chamfer angle is determined.

It can be understood that the first tangent line 18 is perpendicular to the first straight line 17.

The preset chamfer angle, referring to Fig. 6, is the angle D1.

That is to say, the number of second main arcs 122 is two, and the two second main arcs 122 are respectively located on two sides of the first main arc 121 in a direction perpendicular to the first straight line 17.

The position of the second tangent line 19 is obtained through the reference circle 16, the first tangent line 18, and the preset chamfer angle, and then the shape of the second main arc 122 is determined based on a tangent point of the second tangent line 19 and the reference circle 16 and the radius of the second main arc 122.

The central prescription area 10a is located inside a region enclosed by the first main arc 121 and the second main arcs 122.

Thus, by the cooperation of the first main arc 121 and the second main arcs 122, a dimension of the formed innermost datum loop line 12 in a direction perpendicular to the vertical direction is advantageously larger than a dimension thereof in the vertical direction, thereby making the arrangement of the microlenses 20 adapt to the eye-use habit of moving the eyeballs left and right frequently and moving them up and down less, and increasing eye comfort on the basis of satisfying the defocusing effect.

In some embodiments, referring to Fig. 5, the radius of the first main arc 121 is greater than the radius of the reference circle 16; and the radius of each of the second main arcs 122 is greater than the radius of the reference circle 16.

In some embodiments, the operation of determining the position of the center and the radius of the reference circle 16 specifically includes the following operations.

The center of the reference circle 16 is determined to be the center of the datum circle 11.

The radius of the reference circle 16 is calculated based on a sum of the radius of the datum circle 11 and the radius of the base plane 10b of each of the microlenses 20.

The radius of the base plane 10b is half the chord length of the base plane 10b.

Thus, the reference circle 16 can be closer to the datum circle 11, so that the microlenses 20 corresponding to the first main arc 121 and the second main arcs 122 can be closer to the central prescription area 10a, which can advantageously improve the defocusing effect of the defocusing region formed by the microlenses 20.

In some embodiments, the radius of the first main arc 121 is equal to the radius of each of the second main arcs 122.

Thus, advantageously, calculation parameters can be reduced and calculation steps can be simplified.

In some embodiments, referring to Figs. 5 and 6, it is determined that the reference circle 16 is located on a concave side of the first main arc 12 and the reference circle 16 is located on a concave side of each of the second main arcs 122.

Thus, advantageously, the reference points on the innermost datum loop line are close to the central prescription area 10a, which can improve the defocusing effect of the defocusing region formed by the microlenses 20.

In some embodiments, referring to Figs. 5 and 6, the datum loop line 12 further includes first connection arcs 123 and a second connection arc 124, and the operation that the initial parameters are obtained further includes: obtaining a radius of each of the first connection arcs 123 and a radius of the second connection arc 124.

After determining the second main arcs 122 of the innermost datum loop line 12, the arrangement method further includes the following operations.

The first connection arcs 123 of the innermost datum loop line 12 are determined, which includes the following operations. Each of the first connection arcs 123 of the innermost datum loop line 12 is arranged to be connected with an end point of the first main arc 121 of the innermost datum loop line and with a first end point of a respective second main arc of the second main arcs 122 of the innermost datum loop line, and to be tangent to both the first main arc 121 of the innermost datum loop line and the respective second main arc of the innermost datum loop line.

The second connection arc 124 of the innermost datum loop line 12 is determined, which includes the following operation. The second connection arc 124 of the innermost datum loop line 12 is arranged to be connected with a second end point of each of the two second main arcs 122 of the innermost datum loop line, and to be tangent to the two second main arcs 122.

That is to say, the first main arc 121 and the two second main arcs 122 are connected by two first connection arcs 123 and one second connection arc 124, to together form a closed datum loop line 12.

Thus, by the first connection arcs 123 and the second connection arc 124, smooth transitions between the first main arc 121 and the second main arcs 122 and between the two second main arcs 122 can be implemented, which reduces the adverse effect on the defocusing effect of the defocusing region formed by corresponding microlenses 20 on the datum loop line due to the change in the extension direction of the datum loop line 12, and can improve the user's comfort during the process of using the lens.

It can be understood that in order to facilitate arranging the datum points 13 on the first connection arcs 123 and the second connection arc 124, the radius of each of the first connection arcs 123 and the radius of the second connection arc 124 are both greater than the radius of the base plane 10b of each of the microlenses 20.

It can be understood that a curvature of the first main arc 121 and a curvature of each of the second main arcs 122 are both greater than a curvature of each of the first connection arcs 123 and a curvature of the second connection arc 124.

In some embodiments, the radius of each of the first connection arcs 123 is determined to be equal to the radius of the second connection arc 124.

Thus, advantageously, calculation parameters can be reduced and calculation steps can be simplified.

In some embodiments, referring to Figs. 5 and 6, the reference circle 16 is determined to be located on a concave side of each of the first connection arcs 123, and the reference circle 16 is determined to be located on a concave side of each of the second main arcs 122.

Thus, sharp points at a connection position between the first connection arc 123 and the first main arc 121, a connection position between the first connection arc 123 and the second main arc 122, and a connection position between the second connection arc 124 and the second main arc 122 are avoided, which is conducive to reducing interference in arranging the microlenses 20, and makes the change of the extension angle of the reference loop line smoother.

In some embodiments, the operation that the inter-line distances sequentially accumulated in the direction away from the datum circle 11 to obtain the datum loop lines 12 specifically includes the following operations.

Centers are determined, which includes the following operations. It is determined that first main arcs 121 of the datum loop lines 12 share a same center, and second main arcs on a same side of the datum loop lines share a same center.

That is to say, centers of all first main arcs 121 are provided as a same point; and centers of all second main arcs 122 located on a same side, in the extension direction of the first main arc 121 perpendicular to the first straight line 17, are provided as a same point.

The first main arc 121 of each of the datum loop lines 12 is determined, which includes the following operations.

The inter-line distances are sequentially accumulated from inside to outside along a radial direction of the first main arc 121 based on the radius of the first main arc 121 of the innermost datum loop line 12, to calculate a radius of the first main arc 121 of each of the remaining datum loop lines 12.

A position of the first main arc 121 of each of the datum loop lines 12 is calculated based on the center of the first main arc 121 of the innermost datum loop line 12 and the radius of the first main arc 121 of each of the remaining datum loop lines 12.

That is to say, based on the center and the radius of the first main arc 121 of the innermost datum loop line 12, shapes and positions of the first main arcs 121 of the other datum loop lines are determined one by one.

The second main arcs 122 of each of the datum loop lines 12 are determined, which includes the following operations.

The inter-line distances are sequentially accumulated from inside to outside along a radial direction of each of the second main arcs 122 based on the radius of each of the second main arcs 122 of the innermost datum loop line 12, to calculate a radius of each of the second main arcs 122 of each of the remaining datum loop lines 12.

A position of each of the second main arcs 122 of each of the datum loop lines 12 is calculated based on the center of each of the second main arcs 122 of the innermost datum loop line 12 and the radius of each of the second main arcs 122 of each of the remaining datum loop lines 12.

That is to say, based on the center and the radius of the second main arc 122 of the innermost datum loop line 12, shapes and positions of the second main arcs 122 of the other datum loop lines are determined one by one.

Thus, by directly sharing the center, it is easy to simplify the calculation steps for obtaining the shapes and positions of the first main arc 121 and the second main arcs 122 of each of datum loop lines 12, and the probability of interference between the corresponding microlenses 20 on each of the datum loop lines 12 can be reduced.

In some embodiments, the inter-line distance between any two adjacent datum loop lines 12 is the same, that is, the spacing between the first main arcs 121 of any two adjacent datum loop lines 12 is equal, and the spacing between the second main arcs 122 on the same side of any two adjacent datum loop lines 12 is equal.

In some embodiments, the inter-line distance is equal to the center distance, so as to reduce calculation parameters and simplify calculation steps.

In some embodiments, after determining the second main arcs 122 of each of the datum loop lines 12, the arrangement method further includes the following operations.

It is determined that radii of the first connection arcs 123 of the datum loop lines 12 are the same, and radii of the second connection arcs 124 of the datum loop lines 12 are the same.

That is to say, the radii of all first connection arcs 123 are the same as the radius of the first connection arc 123 of the innermost datum loop line 12; and the radii of all second connection arcs 124 are the same as the radius of the second connection arc 124 of the innermost datum loop line 12.

The first connection arcs 123 of each of the datum loop lines 12 are determined, which includes the following operations. Each of the first connection arcs 123 of each of the datum loop lines 12 is arranged to be connected with an end point of the first main arc 121 of a respective datum loop line of the datum loop lines and connected with a first end point of a respective second main arc of the second main arcs 122 of the respective datum loop line; and to be tangent to both the first main arc 121 and the respective second main arc 122 of the respective datum loop line.

That is to say, in any datum loop line 12, when the positions and shapes of the first main arc 121 and the second main arcs 122 are known, based on the radius of the first connection arc 123 and the situation where the first connection arc is tangent to both the first main arc and the second main arc, the position and shape of the first connection arc 123 in the respective datum loop line 12 can be obtained.

The second connection arc 124 of each of the datum loop lines 12 is determined, which includes the following operation. The second connection arc 124 of each of the datum loop lines 12 is arranged to be connected with a second end point of each of two second main arcs 122 of a respective datum loop line of the datum loop lines, and to be tangent to the two second main arcs 122 of the respective datum loop line.

That is to say, in any datum loop line 12, when the positions and shapes of the two second main arcs 122 are known, based on the radius of the second connection arc 124 and the situation where the second connection arc is tangent to the two second main arcs, the positions and shapes of the first connection arcs 123 in the respective datum loop line 12 can be obtained.

Thus, since the radii of first connection arcs 123 are the same, and the radii of the second connection arcs 124 are the same, it is conducive to simplifying the calculation steps for obtaining the shapes and positions of the first main arc 121 and the second main arcs 122 of each of the datum loop lines 12, and it is conducive to having more datum points 13 located on the first main arc 121 and the second main arcs 122, and making the change in the arrangement extension direction of the corresponding microlenses 20 on the same datum loop line 12 smoother, which can improve the defocusing effect and make the user's use more comfortable.

It can be understood that the centers of the first connection arcs 123 on various datum loop lines 12 are not in the same position; and the centers of the second connection arcs 124 on various datum loop lines 12 are not in the same position.

It can be understood that the numbers of datum points 13 on the first main arc 121, the second main arc 122, the first connection arc 123, and the second connection arc 124 are not the same.

In some embodiments, the operation that the number of the datum points 13 on each of the datum loop lines 12 is obtained specifically includes the following operations:

A quotient of an arc length of the first main arc 121 divided by the center distance is calculated and rounds down to obtain the number of datum points 13 on the first main arc 121.

That is to say, after calculating the quotient of the arc length of the first main arc 121 divided by the center distance, the integer part of the value of the quotient is taken. For example, if the quotient of the arc length of the first main arc 121 divided by the center distance is 6.6, which rounds down to 6, then the number of datum points 13 arranged on the first main arc 121 is 6.

A quotient of an arc length of any one of the second main arcs 122 divided by the center distance and rounds down to obtain the number of datum points 13 on each of the second main arcs 122.

That is to say, after calculating the quotient of the arc length of the second main arc 122 divided by the center distance, the integer part of the value of the quotient is taken. For example, if the quotient of the arc length of the second main arc 122 divided by the center distance is 4.3, which rounds down to 4, then the number of datum points 13 arranged on the second main arc 122 is 4.

A quotient of an arc length of any one of the first connection arcs 123 divided by the center distance is calculated and rounds down to obtain the number of datum points 13 on each of the first connection arcs 123.

That is to say, after calculating the quotient of the arc length of the first connection arc 123 divided by the center distance, the integer part of the value of the quotient is taken. For example, if the quotient of the arc length of the first connection arc 123 divided by the center distance is 3.1, which rounds down to 3, then the number of datum points 13 arranged on the first connection arc 123 is 3.

A quotient of an arc length of the second connection arc 124 divided by the center distance is calculated and rounds down to obtain the number of datum points 13 on the second connection arc 124.

That is to say, after calculating the quotient of the arc length of the second connection arc 124 divided by the center distance, the integer part of the value of the quotient is taken. For example, if the quotient of the arc length of the second connection arc 124 divided by the center distance is 3.1, which rounds down to 3, then the number of datum points 13 arranged on the second connection arc 124 is 3.

Thus, by adopting the rounding down method, the microlenses 20 will not be arranged in an overlapping manner, and as many datum points 13 as possible can be arranged on the datum loop line 12, which can advantageously improve space utilization and improve the defocusing effect of the defocusing region formed by the plurality of microlenses 20.

In some embodiments, the operation that the position of the starting datum point 13 is obtained specifically includes the following operations.

Along a first surrounding direction, an head end of the first main arc 121 is determined to be a starting datum point 13 on the first main arc 121, a head end of each of the second main arcs 122 is determined to be a starting datum point 13 on each of the second main arc 122, an head end of each of the first connection arcs 123 is determined to be a starting datum point 13 on each of the first connection arcs 123, and a head end of the second connection arc 124 is determined to be a starting datum point 13 on the second connection arc 124.

The first surrounding direction refers to any one of two senses along the extension direction of the datum loop line 12.

It can be understood that along the first surrounding direction, an tail end of the first main arc 121 is a head end of one first connection arc 123, a tail end of the first connection arc 123 is a head end of one second main arc 122, an tail end of the second main arc 122 is a head end of the second connection arc 124, a tail end of the second connection arc 124 is a head end of another second main arc 122, a tail end of the other second main arc 122 is connected to a head end of another first connection arc 123, and a tail end of the other first connection arc 123 is connected to a head end of the first main arc 121.

Thus, the datum points 13 can be sequentially arranged on the datum loop line 12 along the first surrounding direction, thereby reducing the probability of overlapping arrangements of the microlenses 20.

In some embodiments, a radius of the reference circle 16 is denoted by R₁, a radius of the lens substrate 10 is denoted by D, a chord length of the base plane 10b of the microlens 20 is denoted by L3, the center distance is L2 = 3/2 * L3, the inter-line distance is L1 = 3/2 * L3, the radius of the first main arc 121 and the radius of the second main arc 122 of each of the datum loop lines 12 are equal to each other, and the radii of the first connection arcs 123 and the radii of the second connection arcs 124 of the datum loop lines 12 are the same, which can be denoted as Rⱼₒᵢₙₜ and are fixed values, and the preset chamfer angle D1 between the first tangent line 18 and the second tangent line 19 corresponding to each of the datum loop lines 12 is equal.

A two-dimensional coordinate system is established on the base plane 10b, the datum circle 11 is arranged to coincide with the central prescription area 10a, the center of the first main arc 121 of the innermost datum loop line 12 is taken as a coordinate origin, a straight line passing through the coordinate origin and perpendicular to the first straight line 17 is provided as a coordinate horizontal axis, and a straight line where the first straight line 17 is located is provided as a coordinate vertical axis.

The radius of the first main arc 121 and the radius of each of the second main arcs 122 of each of the datum loop lines 12 satisfy the following formula: ${R}_{j} = {R}_{1} + \left(j-1\right) * L 1$

In the above formula, Rⱼ denotes the radius of the first main arc 121 of the j-th datum loop line and also the radius of the second main arc 122 of the j-th datum loop line, where j=1, 2, 3, 4 ... n, and n is the total number of the datum loop lines 12.

That is to say, a tangent point of the first main arc 121 of the innermost datum loop line 12 and the reference circle 16 is (0, R₁).

The total number n of the datum loop lines 12 satisfies the following formula: $n = floor \left(\left(D-{R}_{1}\right)/L1\right)$

In the above formula, "floor" refers to the rounding down function/the floor function.

Center coordinates (xₚ, yₚ) corresponding to the first connection arc 123 and the second connection arc 124 satisfy the following system of equations: $\left\{\begin{matrix}{\left({x}_{k}-{x}_{p}\right)}^{2} + {\left({y}_{k}-{y}_{p}\right)}^{2} = {\left({R}_{j}-{R}_{joint}\right)}^{2} \\ {\left({x}_{1}-{x}_{p}\right)}^{2} + {\left({y}_{1}-{y}_{p}\right)}^{2} = {\left({R}_{j}-{R}_{joint}\right)}^{2}\end{matrix}\right.$

In the above system of equations, xₖ and yₖ, as well as xₗ and yₗ represent coordinates of two main arcs connected to a connection arc, respectively. For example, if we calculate the center coordinates of the second connection arc 124, then xₖ and yₖ, as well as xₗ and yₗ represent the respective coordinates of the two second main arcs 122 respectively.

The center coordinates of an arc in the i-th datum loop line 12 are (xᵢ, yᵢ), coordinates of end points of the arc are (xᵢₛ, yᵢₛ) and (xᵢₑ, yᵢₑ), and a radius of the arc is denoted by R_{X}. Here, the arc refers to any one of the first main arc 121, the second main arc 122, the first connection arc 123, and the second connection arc 124.

When the arc is the first main arc 121 or the second main arc 122, Rₓ = Rⱼ; and when the arc is the first main arc 121 or the second main arc 122, Rₓ = Rⱼₒᵢₙₜ.

The number m of datum points 13 on the arc in the i-th datum loop line 12 satisfies the following formula: ${m}_{i} = floor \left(θ*{R}_{x}/L2\right) .$

The "θ"in the above formula satisfies the following relationship: $θ = arccos \left(\frac{\left({x}_{i}-{x}_{is}\right) * \left({x}_{i}-{x}_{ie}\right) + \left({y}_{i}-{x}_{is}\right) * \left({x}_{i}-{x}_{ie}\right)}{\sqrt{{\left({x}_{i}-{x}_{is}\right)}^{2} + {\left({y}_{i}-{x}_{is}\right)}^{2}} * \sqrt{{\left({x}_{i}-{x}_{ie}\right)}^{2} + {\left({y}_{i}-{x}_{ie}\right)}^{2}}}\right) .$

The angle between the coordinates of the u-th datum point 13 on the arc and the coordinate horizontal axis is: ${θ}_{u} = \frac{θ}{{m}_{i}} * u + arctan \left(\frac{{y}_{is} - {y}_{i}}{{x}_{is} - {x}_{i}}\right) .$

In the above formula, u=0, 1, 2, 3, 4 ... mᵢ-1.

The coordinates of the datum point 13 are (Rₓ * cos θᵤ, Rₓ * sin θᵤ).

### Third Implementation Way

Due to the limitation of the size of the human eye's field of view, the defocusing effect produced by the microlenses 20 closer to the edge of the lens substrate 10 has less influence on the human eye, and in the actual lens fitting process, the edge of the lens substrate 10 will be ground off.

In some embodiments, referring to Fig. 7, the operation that the inter-line distances each defined between two adjacent datum loop lines 12 are obtained specifically includes the following operations.

A chord length of a base plane 10b of any one of the microlenses 20 and a first proportional coefficient are obtained, the first proportional coefficient being greater than 1.

A first inter-line distance in a direction away from the datum circle 11 is calculated based on a product of the chord length of the base plane 10b and the first proportional coefficient.

A subsequent inter-line distance is calculated based on a product of a previous inter-line distance of the inter-line distances and the first proportional coefficient, along the direction away from the datum circle 11.

The first inter-line distance refers to an inter-line distance between the innermost datum loop line 12 and another datum loop line 12 adjacent to the innermost datum loop line.

That is to say, the inter-line distances along the direction away from the datum circle 11 form a geometric sequence.

Thus, the further away from the datum circle 11, the larger the value of the inter-line distance, and the more sparse the arrangement of the datum loop lines 12, so that the microlenses 20 closer to the edge of the lens substrate 10 are arranged more sparsely, which can advantageously reduce manufacturing costs.

It can be understood that the shapes and sizes of the reference projections 21 are the same.

The first proportional coefficient ranges from 1.03 to 1.1. Its specific value is not limited, for example, 1.03, 1.04, 1.05, 1.07, 1.08, 1.09, 1.1, etc.

The radius of the arc of the i-th datum loop line 12 satisfies the following formula: ${R}_{i} = R + \left(\left(1-{q}^{i}\right)/\left(1-q\right)\right) * L 1$

In the above formula, Rᵢ denotes the radius of the arc of the i-th datum loop line 12, where i=1, 2, 3, 4 ... n, and n denotes the total number of the datum loop lines 12.

The arc of the datum loop line 12, in the case where the datum loop line 12 is a circle, can be the entire circle, or it can be the first main arc 121 and also the second main arc 122.

In some embodiments, ,the center distance between the datum points 13 on the subsequent datum loop line 12 is calculated based on the product of the center distance between the datum points 13 on the previous datum loop line 12 and the first proportional coefficient, along the direction away from the datum circle 11.

Thus, advantageously, the further away from the datum circle 11, the more sparse the arrangement of the datum points 13 on the datum loop line 12, so that the microlenses 20 closer to the edge of the lens substrate 10 are arranged more sparsely, which can advantageously reduce manufacturing costs.

The center distance of the i-th datum loop line 12 satisfies the following formula: ${L 1}_{i} = {L 1}_{1} * {q}^{\left(t-1\right)} .$

In the above formula, L1ᵢ denotes the center distance on the i-th datum loop line, where i=1, 2, 3, 4 ... n, n denotes the total number of the datum loop lines 12, and L1₁ denotes the center distance on the innermost datum loop line.

### Fourth Implementation Way

This implementation way not only can increase the proportion of microlenses 20 on the substrate arc surface 10c, but also can reduce the manufacturing difficulty of the microlenses 20.

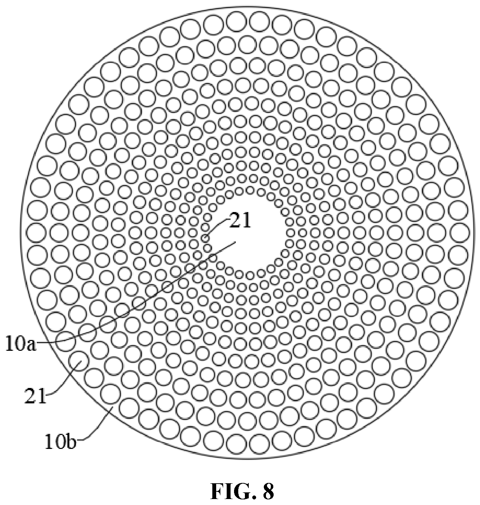

Specifically, referring to Fig. 8, the operation that the inter-line distances each defined between two adjacent datum loop lines 12 are obtained specifically includes the following operations.

A second proportional coefficient and an inter-lens distance between two adjacent reference projections 21 on a same datum loop line 12 of the datum loop lines are obtained, the second proportional coefficient being greater than 1.

A datum radius of each of the microlenses 20 corresponding to the innermost datum loop line 12 is obtained.

A product of a radius of each of the reference projections 21 on a previous datum loop line of the datum loop lines and the second proportional coefficient is calculated along a direction away from the datum circle 11, to obtain a radius of each of the reference projections 21 on a subsequent datum loop line of the datum loop lines.

A sum of the radius of any one of the reference projections 21 on the previous the datum loop line 12, the radius of any one of the reference projections 21 on the subsequent datum loop line 12, and the inter-lens distance is calculated to obtain the inter-line distances.

That is to say, a projection area of any one the reference projections 21 on the subsequent datum loop line is larger than a projection area of any one of the reference projections on the previous datum loop line.

It can be understood that the further away from the datum circle 11, the larger the inter-line distance between two adjacent datum loop lines 12.

Thus, by making the projection area of the reference projection 21 further away from the datum circle 11 larger, it is conducive to increasing the proportion of the microlenses 20 on the substrate arc surface 10c, while reducing the manufacturing difficulty of the microlenses 20.

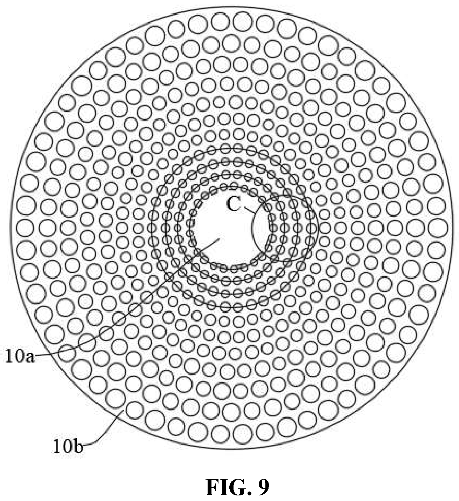

In some embodiments, referring to Figs. 9 and 10, the reference projections 21 corresponding to each of the datum loop lines 12 include first sub-projections 211 and second sub-projections 212, and a radius of each of the second sub-projections 212 is greater than a radius of each of the first sub-projections 211.

The operation that the inter-line distances each defined between two adjacent datum loop lines 12 are obtained specifically includes the following operations.

A second proportional coefficient and an inter-lens distance between two adjacent reference projections 21 on a same datum loop line 12 are obtained, the second proportional coefficient being greater than 1.

A datum radius of each of the second sub-projections 212 corresponding to the innermost datum loop line 12 is obtained.

A product of the radius of any of the second sub-projections 212 corresponding to a previous datum loop line 12 of the datum loop lines and the second proportional coefficient is calculated along a direction away from the datum circle 11, to obtain a radius of each of the second sub-projections 212 corresponding to a subsequent datum loop line 12 of the datum loop lines.

A sum of the radius of any one of the second sub-projections 212 corresponding to the previous datum loop line 12, the radius of any one of the second sub-projections 212 corresponding to the subsequent datum loop line 12, and the inter-lens distance is calculated, to obtain the inter-line distances.

That is to say, the reference projections 21 corresponding to the same datum loop line 12 have different sizes.

Thus, the reference projections 21 of different sizes on different datum loop lines 12 will not interfere with each other, thereby reducing the probability of interference between the corresponding microlenses 20.

In order to make the positions of the corresponding projection points 14 on the substrate arc surface 10c more accurate, the number of three-dimensional coordinate points taken on the substrate arc surface 10c ranges from 8 million to 30 million, so that the positional accuracy of the projection points 14 meets the defocusing effect of the defocusing region formed by the microlenses 20.

The specific number of three-dimensional coordinate points is not limited, for example, 8 million, 10 million, 15 million, 20 million, 25 million, 30 million, etc.

The various embodiments/implementation ways provided by this disclosure can be combined with each other as long as there is no contradiction.

The above description involves only preferred embodiments of this disclosure and is not intended to limit this disclosure. For those skilled in the art, this disclosure can have various changes and modifications. Any modification, equivalent replacement, improvement, etc., made within the spirit and principles of this disclosure shall fall within the scope of protection of this disclosure.

## Claims

1. An arrangement method of microlenses, comprising:
obtaining a position of a central prescription area of a lens substrate on a base plane of the lens substrate;
obtaining a position of a datum circle on the base plane so that the central prescription area is located within a range of the datum circle;
obtaining a position of an innermost datum loop line of datum loop lines so that the datum circle is located inside the innermost datum loop line,
obtaining inter-line distances each defined between two adjacent datum loop lines of the datum loop lines, and sequentially accumulating the inter-line distances in a direction away from the datum circle based on the position of the innermost datum loop line to calculate positions of the remaining datum loop lines of the datum loop lines;
obtaining the number of datum points on each of the datum loop lines and obtaining a position of a starting datum point of the datum points;
obtaining a center distance between reference projections of any two adjacent microlenses on each of the datum loop lines, and calculating positions of the remaining datum points on each of the datum loop lines based on the center distance and the position of the starting datum point, along an extension direction of each of the datum loop lines;
determining corresponding projection points of datum points on a substrate arc surface of the lens substrate along a thickness direction of the lens substrate, and determining positions of the microlenses based on positions of the projection points.

2. The arrangement method according to claim 1, wherein the operation that the central prescription area is located within the range of the datum circle specifically comprises:
coinciding the datum circle with the central prescription area.

3. The arrangement method according to claim 1, wherein the innermost datum loop line and the datum circle are configured such that:
at least some of reference projections on the innermost datum loop line are tangent to the datum circle.

4. The arrangement method according to claim 1, wherein the operation of obtaining the position of the innermost datum loop line specifically comprises:
obtaining a first spacing between the innermost datum loop line and the datum circle, and calculating a radius of the innermost datum loop line based on a sum of the first spacing and a radius of the datum circle; and
determining the position of the innermost datum loop line based on a position of a center of the datum circle.

5. The arrangement method according to claim 4, wherein each of the inter-line distances is provided as a fixed value not less than a chord length of a base plane of each of the microlenses;
the operation of sequentially accumulating the inter-line distances in the direction away from the datum circle to calculate the positions of the datum loop lines, specifically comprises:
sequentially accumulating the inter-line distances from inside to outside along a radial direction of the datum circle based on the radius of the innermost datum loop line, to calculate radii of the remaining datum loop lines;
determining positions of the remaining datum loop lines based on the position of the innermost datum loop line and the radii of the remaining datum loop lines.

6. The arrangement method according to claim 5, wherein the arrangement method, before calculating the radii of the remaining datum loop lines, further comprises:
obtaining a radius of the base plane;
calculating a difference between the radius of the base plane and the radius of the datum circle to obtain a first radial dimension;
calculating a quotient of the first radial dimension divided by the inter-line distance, which rounds down, to obtain a value of the total number of the datum loop lines.

7. The arrangement method according to claim 5, wherein the operation of obtaining the number of the datum points on each of the datum loop lines specifically comprises:
calculating a quotient of a perimeter of each of the datum loop lines divided by the center distance, which rounds down, to obtain the number of the datum points on each of the datum loop lines.

8. The arrangement method according to claim 5, wherein the operation of obtaining the position of the starting datum point on each of the datum loop lines specifically comprises:
determining an intersection of each of the datum loop lines with a straight line passing through the center of the datum circle as the starting datum point.

9. The arrangement method according to claim 5, wherein the operation of obtaining the position of the starting datum point on each of the datum loop lines specifically comprises:
obtaining a position of a reference curve, wherein the reference curve passes through the innermost datum loop line and a boundary of the base plane of the lens substrate; and
determining an intersection of each of the datum loop lines with the reference curve as the starting datum point.

10. The arrangement method according to claim 1, wherein each of the datum loop lines comprises a first main arc and second main arcs; and
wherein the operation of obtaining the position of the innermost datum loop line specifically comprises:
obtaining initial parameters, which comprises obtaining a radius of the first main arc of the innermost datum loop line, a radius of each of the second main arcs of the innermost datum loop line, a reference spacing, and a preset chamfer angle;
determining a reference circle, which comprises determining a position of a center of and a radius of the reference circle based on the reference spacing, a radius of the datum circle, and a position of a center of the datum circle;
determining the first main arc of the innermost datum loop line, which comprises arranging the first main arc of the innermost datum loop line to be axisymmetric with respect to a first straight line in a vertical direction passing through the center of the datum circle, and to be tangent to the reference circle; and
determining the second main arcs of the innermost datum loop line, which comprises arranging the second main arcs to be located below the first main arc, and arranging two second main arcs to be axisymmetric with respect to the first straight line and tangent to the reference circle, obtaining a position of a first tangent line formed by the first main arc and the reference circle, obtaining a position of a second tangent line formed by a respective second main arc of the second main arcs and the reference circle, and then determining that an angle between the first tangent line and the second tangent line is equal to the preset chamfer angle.

11. The arrangement method according to claim 10, comprising determining that the radius of the first main arc is equal to the radius of each of the second main arcs;
and/or,
determining that the reference circle is located on a concave side of the first main arc, and the reference circle is located on a concave side of each of the second main arcs.

12. The arrangement method according to claim 10, wherein each of the datum loop lines further comprises first connection arcs and a second connection arc, and wherein the operation of obtaining the initial parameters further comprises: obtaining a radius of each of the first connection arcs and a radius of the second connection arc;
wherein the arrangement method, after the operation of determining the second main arcs of the innermost datum loop line, further comprises:
determining the first connection arcs of the innermost datum loop line, which comprises arranging each of the first connection arcs of the innermost datum loop line to be connected with an end point of the first main arc of the innermost datum loop line and a first end point of a respective second main arc of the second main arcs of the innermost datum loop line, and to be tangent to both the first main arc of the innermost datum loop line and the respective second main arc of the innermost datum loop line;
determining the second connection arc of the innermost datum loop line, which comprises arranging the second connection arc of the innermost datum loop line to be connected with a second end point of each of two second main arcs of the innermost datum loop line, and to be tangent to the two second main arcs.

13. The arrangement method according to claim 12, further comprising determining that the radius of each of the first connection arcs is equal to the radius of the second connection arc;
and/or,
determining that the reference circle is located on a concave side of each of the first connection arcs, and the reference circle is located on a concave side of each of the second main arcs.

14. The arrangement method according to claim 12, wherein the operation of sequentially accumulating the inter-line distances in the direction away from the datum circle to obtain the datum loop lines specifically comprises:
determining centers, which comprises determining that first main arcs of the datum loop lines share a same center, and second main arcs on a same side of the datum loop lines share a same center;
determining the first main arc of each of the datum loop lines, which comprises:
sequentially accumulating the inter-line distances from inside to outside along a radial direction of the first main arc, based on the radius of the first main arc of the innermost datum loop line, to calculate a radius of the first main arc of each of the remaining datum loop lines; and
calculating a position of the first main arc of each of the datum loop lines based on the center of the first main arc of the innermost datum loop line and the radius of the first main arc of each of the remaining datum loop lines;
determining the second main arcs of each of the datum loop lines, which comprises:
sequentially accumulating the inter-line distances from inside to outside along a radial direction of each of the second main arcs based on the radius of each of the second main arcs of the innermost datum loop line, to calculate a radius of each of the second main arcs of each of the remaining datum loop lines;
calculating a position of each of the second main arcs of each of the datum loop lines based on the center of each of the second main arcs of the innermost datum loop line and the radius of each of the second main arcs of each of the remaining datum loop lines.

15. The arrangement method according to claim 14, wherein the arrangement method, after the operation of determining the second main arcs of each of the datum loop lines, further comprises:
determining that radii of the first connection arcs of the datum loop lines are the same, and determining that radii of the second connection arcs of the datum loop lines are the same;
determining the first connection arcs of each of the datum loop lines, which comprises arranging each of the first connection arcs of each of the datum loop lines to be connected with an end point of the first main arc of a respective datum loop line of the datum loop lines and a first end point of a respective second main arc of the second main arcs of the respective datum loop line, and to be tangent to both the first main arc and the respective second main arc of the respective datum loop line;
determining the second connection arc of each of the datum loop lines, which comprises arranging the second connection arc of each of the datum loop lines to be connected with a second end point of each of two second main arcs of a respective datum loop line of the datum loop lines, and to be tangent to the two second main arcs of the respective datum loop line.

16. The arrangement method according to claim 15, wherein the operation of obtaining the number of the datum points on each of the datum loop lines specifically comprises:
calculating a quotient of an arc length of the first main arc divided by the center distance, which rounds down, to obtain the number of datum points on the first main arc;
calculating a quotient of an arc length of any one of the second main arcs divided by the center distance, which rounds down, to obtain the number of datum points on each of the second main arcs;
calculating a quotient of an arc length of any one of the first connection arcs divided by the center distance, which rounds down, to obtain the number of datum points on each of the first connection arcs;
calculating a quotient of an arc length of the second connection arc divided by the center distance, which rounds down, to obtain the number of datum points on the second connection arc.

17. The arrangement method according to claim 15, wherein the operation of obtaining the position of the starting datum point specifically comprises:
determining, along a first surrounding direction, a head end of the first main arc to be a starting datum point on the first main arc, head ends of the second main arcs to be starting datum points on the second main arcs, head ends of the first connection arcs to be starting datum points on the first connection arcs, and a head end of the second connection arc to be a starting datum point on the second connection arc.

18. The arrangement method according to claim 1, wherein the operation of obtaining the inter-line distances each defined between two adjacent datum loop lines specifically comprises:
obtaining a chord length of a base plane of any one of the microlenses and a first proportional coefficient, the first proportional coefficient being greater than 1;
calculating a first inter-line distance of the inter-line distances along a direction away from the datum circle based on a product of the chord length of the base plane and the first proportional coefficient; and
calculating a subsequent inter-line distance of the inter-line distances based on a product of a previous inter-line distance of the inter-line distances and the first proportional coefficient along the direction away from the datum circle.

19. The arrangement method according to claim 1, wherein the operation of obtaining the inter-line distances each defined between two adjacent datum loop lines specifically comprises:
obtaining a second proportional coefficient and an inter-lens distance between two adjacent reference projections on a same datum loop line of the datum loop lines, the second proportional coefficient being greater than 1;
obtaining a datum radius of each of the microlenses corresponding to the innermost datum loop line;
calculating a product of a radius of each of the reference projections on a previous datum loop line of the datum loop lines and the second proportional coefficient along a direction away from the datum circle, to obtain a radius of each of the reference projections of a subsequent datum loop line of the datum loop lines;
calculating a sum of the radius of any one of the reference projections on the previous datum loop line, the radius of any one of the reference projections on the subsequent datum loop line, and the inter-lens distance, to obtain the inter-line distances.

20. The arrangement method according to claim 1, wherein the reference projections corresponding to each of the datum loop lines comprise first sub-projections and second sub-projections, and a radius of each of the second sub-projections is greater than a radius of each of the first sub-projections;
wherein the operation of obtaining the inter-line distances each defined between two adjacent datum loop lines specifically comprises:
obtaining a second proportional coefficient and an inter-lens distance between two adjacent reference projections on a same datum loop line of the datum loop lines, the second proportional coefficient being greater than 1;
obtaining a datum radius of each of the second sub-projections corresponding to the innermost datum loop line;
calculating a product of the radius of any one of the second sub-projections corresponding to a previous datum loop line of the datum loop lines and the second proportional coefficient along a direction away from the datum circle, to obtain a radius of each of the second sub-projections corresponding to a subsequent datum loop line of the datum loop lines; and
calculating a sum of the radius of any one of the second sub-projections corresponding to the previous datum loop line, the radius of any one of the second sub-projections corresponding to the subsequent datum loop line, and the inter-lens distance, to obtain the inter-line distances.
